# EUROPÄISCHE PATENTANMELDUNG

(11) **EP 4 155 784 A1**
(43) Veröffentlichungstag der Anmeldung: **29.03.2023**
(21) Anmeldenummer: 21199339.9
(22) Anmeldetag: 28.09.2021
(51) Int. Cl.: G02B 5/02, G02B 27/48, G01N 21/39

(54) **VORSATZOPTIK-EINRICHTUNG ZUR VERRINGERUNG DER INTERFERENZSTREIFEN IN EINEM LASERSPEKTROSKOPIESYSTEM**

(71) Anmelder: Siemens Aktiengesellschaft, 80333 München (DE)
(72) Erfinder: Steinbacher, Franz, 76137 Karlsruhe (DE)
(74) Vertreter: Siemens Patent Attorneys

(57) **Zusammenfassung**

Die Erfindung betrifft eine Vorsatzoptik-Einrichtung zur Verringerung der Interferenzstreifen, die durch in einem optischen System einer Laserspektroskopieeinrichtung propagierendes Licht (5) erzeugt werden, wobei die Vorsatzoptik-Einrichtung (1) eine Lichteintrittsfläche (2), eine Lichtaustrittsfläche (3) und ein Lichtumlenkelement (4) umfasst, wobei die Lichteintrittsfläche (2) gegenüber dem Lichtumlenkelement (4) angeordnet ist, wobei das Lichtumlenkelement (4) gegenüber der Lichtaustrittsfläche (3) angeordnet ist und dazu ausgebildet ist, durch die Lichteintrittsfläche (2) in die Vorsatzoptik-Einrichtung (1) einfallendes Licht (5), vorzugsweise gesamtes durch die Lichteintrittsfläche in die Vorsatzoptik-Einrichtung einfallendes Licht in Richtung der Lichtaustrittsfläche (3) umzulenken, wobei das Lichtumlenkelement (4) eine reflektierende Oberfläche (6) aufweist, die zumindest teilweise aufgeraut ist.

## Beschreibung

Die Erfindung betrifft eine Vorsatzoptik-Einrichtung zur Verringerung von Interferenzstreifen, die durch im optischen System eines Laserspektroskopiesystems propagierendes Licht erzeugt werden.

Darüber hinaus betrifft die Erfindung ein optisches System mit einer solchen Vorsatzoptik-Einrichtung.

Außerdem betrifft die Erfindung einen digitalen Zwilling des vorgenannten optischen Systems.

Die Laserabsorptionsspektroskopie, beispielsweise Laserabsorptionsspektroskopie mittels durchstimmbarer Laserdioden (engl. Tunable Diode Laser Absorption Spectroscopy oder kurz TDLAS) ist ein Verfahren zur Messung der Konzentration von Spurengasen, zum Beispiel im sub-ppm (part-per-million) Bereich.

Die wichtigste Quelle für Rauschen bzw. Untergrund bei Messsignalen in der Laserabsorptionsspektroskopie ist die Erzeugung von störenden stehenden optischen Wellen im optischen System, die so genannten Etalon-Effekte. Die Etalon-Effekte entstehen durch Mehrfachreflexionen an verschiedenen optischen Oberflächen, wie Spiegeln, Fenstern usw. Die Etalon-Effekte führen zu Interferenzstreifen, die das erfasste Signal beeinträchtigen. Der Abstand zwischen den Maxima dieser Streifen kann im gleichen Wellenlängenbereich liegen wie die Breite der Doppler- und druckerweiterten Moleküllinien (z.B. 10⁻³ bis 10⁻² cm⁻¹) ; dies kann zu einer Verzerrung oder vollständigen Verdeckung der Form und Stärke der Absorptionslinie führen, was wiederum zur Verdeckung des analytischen Signals einer Probe führen kann.

Verfahren und Systeme zur Verringerung der Etalonbildung (zur Verringerung der Etalon-Effekte) sind im Stand der Technik hinlänglich bekannt. Dazu gehören beispielsweise die Verwendung optischer Isolatoren, die Verwendung reflektierender statt refraktiver Optiken, die Abwinkelung und die Antireflexionsbeschichtung von reflektierenden Oberflächen. Darüber hinaus sind Verfahren und Systeme zur Beseitigung oder Verringerung der Amplitude des Streifensignals bekannt: (a) mechanische Oszillation der Weglänge mittels externer Geräte, (b) Einführung eines asynchronen Stroms zusätzlich zum üblichen Modulationsstrom durch die Laserdiode, (c) Verwendung alternativer Wellenformen und (d) Filterung nach der Detektion (siehe Masiyano, D., Hodgkinson, J. & Tatam, R. "Use of diffuse reflections in tunable diode laser absorption spectroscopy: implications of laser speckle for gas absorption measurements". Appl. Phys. B 90, 279-288 (2008). https://doi.org/10.1007/s00340-007-2896-z und die darin enthaltenen Literaturverweise).

Allerdings lassen sich Etalon-Effekte selbst bei Verwendung einer der vorgenannten Verfahren oder Systeme nur schwer beseitigen. Außerdem sind diese Verfahren und Systeme oft kompliziert (Einführen des asynchronen Stroms oder der mechanischen Schwingungen der Diode) und/oder kostspielig (Antireflexionsbeschichtung).

Die der vorliegenden Erfindung zugrunde liegende Aufgabe kann somit darin gesehen werden, bei der Laserspektroskopie eingesetzte optische Einrichtungen weiterzubilden und die Etalon-Effekte auf eine simple und kostengünstige Weise zu reduzieren.

Die Aufgabe wird mit einer eingangs genannten Vorsatzoptik-Einrichtung erfindungsgemäß dadurch gelöst, dass die Vorsatzoptik-Einrichtung eine Lichteintrittsfläche, eine Lichtaustrittsfläche und ein Lichtumlenkelement umfasst, wobei die Lichteintrittsfläche gegenüber dem Lichtumlenkelement angeordnet ist, wobei das Lichtumlenkelement gegenüber der Lichtaustrittsfläche angeordnet ist und dazu ausgebildet ist, durch die Lichteintrittsfläche in die Vorsatzoptik-Einrichtung einfallendes Licht, vorzugsweise gesamtes durch die Lichteintrittsfläche in die Vorsatzoptik-Einrichtung einfallendes Licht in Richtung der Lichtaustrittsfläche umzulenken, wobei das Lichtumlenkelement eine reflektierende Oberfläche aufweist, die zumindest teilweise aufgeraut ist.

Die aufgeraute Oberfläche ist derart ausgebildet, dass eine Vielzahl von unterschiedlich verzögerten Pfaden entsteht, die sich am Detektor addieren können. Vorzugsweise addieren sich alle verzögerten Pfade. Die unterschiedliche Verzögerung der Pfade entsteht durch diffuse Reflexion des Lichts an der aufgerauten Oberfläche. Dadurch werden die Interferenzstreifen breiter, Interferenzmuster verschmiert.

Vorzugsweise ist die Rauheit der Oberfläche mit bloßem Auge wahrnehmbar, so dass der Unterschied zwischen einer nicht aufgerauten Oberfläche und einer aufgerauten Oberfläche sofort erkennbar ist.

Mit anderen Worten weist die reflektierende Oberfläche eine Rauheit auf. Dabei sind Erhebungen und Vertiefungen der rauen reflektierenden Oberfläche vorzugsweise größer als die Wellenlänge einer Laserlichtquelle, die verwendet wird, um Licht zu erzeugen. Die Erhebungen und Vertiefungen liegen beispielsweise im Mikrometerbereich. Vorzugsweise weist die aufgeraute reflektierende Oberfläche keine Muster auf. Die reflektierende Oberfläche darf somit von schlechter Qualität sein.

Die Vorsatzoptik-Einrichtung kann insbesondere bei In-situ-Gasanalysatoren verwendet werden.

Bei einer Ausführungsform kann es vorgesehen sein, dass die gesamte reflektierende Oberfläche des Lichtumlenkelements aufgeraut ist.

Bei einer Ausführungsform kann es vorgesehen sein, dass die reflektierende Oberfläche eine Goldbeschichtung umfasst, vorzugsweise als eine Goldbeschichtung ausgebildet ist.

Bei einer Ausführungsform kann es vorgesehen sein, dass die reflektierende Oberfläche planar oder als ein Parabolspiegel ausgebildet ist. Der Parabolspiegel kann dabei als ein, z.B. aus Stahl gedruckter, Reflexionsspiegel mit Vergoldung ausgebildet sein.

Bei einer Ausführungsform kann es vorgesehen sein, dass die Vorsatzoptik-Einrichtung keine Linsen umfasst. Linsen sind frequenzabhängig. Es werden für verschiedene Wellenlängen verschiedene Linsen benötigt. Die Vorsatzoptik-Einrichtung weist keine Linsen auf, ist breitbandig und reflektiert diffus, also für viele Wellenlängen brauchbar.

Bei einer Ausführungsform kann es vorgesehen sein, dass die reflektierende Oberfläche um etwa 45° Winkel zu der Lichteintritts- und zu der Lichtaustrittsfläche der Vorsatzoptik-Einrichtung geneigt ist.

Bei einer Ausführungsform kann es vorgesehen sein, dass die Vorsatzoptik-Einrichtung lichteintrittsseitig einen Bereich aufweist, der zur Aufnahme und vorzugsweise Befestigung einer Laserlichtquelle ausgebildet ist.

Bei einer Ausführungsform kann es vorgesehen sein, dass die Vorsatzoptik-Einrichtung ein, beispielsweise rohrförmig ausgebildetes Gehäuse aufweist.

Bei einer Ausführungsform kann es vorgesehen sein, dass das Gehäuse als Hohlkörper ausgebildet ist.

Bei einer Ausführungsform kann es vorgesehen sein, dass der Hohlkörper einer zur Strahlformung vorgesehene Form aufweist. Bei einer Ausführungsform kann es vorgesehen sein, dass das Lichtumlenkelement in einer der Lichtaustrittsfläche gegenüberliegenden Aufnahme des Gehäuses aufgenommen ist.

Bei einer Ausführungsform kann es vorgesehen sein, dass an einem zwischen der Lichtaustrittsfläche und der reflektierenden Oberfläche liegenden Gehäuseinnenwandabschnitt eine Vielzahl von vorzugsweise pyramideförmigen Erhebungen angeordnet sind. Mit anderen Worten kann der Gehäuseinnenwandabschnitt eine Pyramidenstruktur aufweisen. Die Pyramidenstruktur ist dazu ausgebildet, Ausbreitung der Strahlen, die sich nicht entlang der optischen Achse ausbreiten, zu verhindern. Hierdurch werden an der Gehäuseinnenwand entstehende Reflexionen reduziert, wodurch die Etalon-Effekte noch weniger zum Vorschein kommen.

Bei einer Ausführungsform kann es vorgesehen sein, dass die pyramideförmigen Erhebungen über den gesamten Gehäuseinnenwandabschnitt vorzugsweise gleichmäßig verteilt sind.

Bei einer Ausführungsform kann es vorgesehen sein, dass die pyramideförmigen Erhebungen als eine aus dem Gehäuse herausnehmenbare Einlage, vorzugsweise eine Kunststoffeinlage, insbesondere eine gedruckte Kunststoffeinlage ausgebildet ist.

Bei einer Ausführungsform kann es vorgesehen sein, dass das Gehäuse zwei, beispielsweise rohrförmige Abschnitte - einen ersten und einen zweiten Abschnitt - aufweist, die beispielsweise unter einem Winkel von etwa 90° (d.h. die optischen Achsen der Abschnitte sind rechtwinklig zueinander) zueinander angeordnet sind, wobei der erste Abschnitt eine erste Öffnung und eine zweite, der der ersten Öffnung gegenüberliegende Öffnung aufweist, wobei die erste Öffnung die Lichteintrittsfläche bildet und die zweite Öffnung form- und größenübereinstimmend mit einer Öffnung des zweiten Abschnitts ist, sodass im Wesentlichen das gesamte Licht aus dem ersten Abschnitt in den zweiten Abschnitt gelangen und auf das Lichtumlenkelement einfallen kann.

Bei einer Ausführungsform kann es vorgesehen sein, dass sowohl der erste als auch der zweite Abschnitt als Hohlkörper ausgebildet sind.

Die oben genannte Aufgabe wird außerdem mit einem eingangs genannten optischen System einer Laserspektroskopieeinrichtung erfindungsgemäß dadurch gelöst, dass das optische System die vorgenannte Vorsatzoptik-Einrichtung, eine, vorzugsweise an der Vorsatzoptik-Einrichtung befestigbare Laserlichtquelle, beispielsweise eine durchstimmbare Laserlichtdiode und eine Detektoreinrichtung aufweist, wobei die Laserlichtquelle dazu ausgebildet und derart angeordnet ist, erzeugtes Laserlicht in die Vorsatzoptik-Einrichtung, die zwischen der Laserlichtquelle und der Detektoreinrichtung angeordnet ist, einzustrahlen. Das in die Vorsatzoptik-Einrichtung eingestrahlte Licht propagiert zwischen der Lichteintritts- und der Lichtaustrittsfläche der Vorsatzoptik-Einrichtung und breitet sich nach dem Austritt aus der Vorsatzoptik-Einrichtung in Richtung der Detektoreinrichtung.

Bei einer Ausführungsform kann es vorgesehen sein, dass die Detektoreinrichtung eine weitere vorgenannte Vorsatzoptik-Einrichtung und einen Detektor umfasst, wobei die weitere Vorsatzoptik-Einrichtung derart angeordnet ist, dass der Detektor im Wesentlichen nur jenes Licht empfangen kann, das durch die weitere Vorsatzoptik-Einrichtung hindurchtritt.

Weiterhin ist eine Laserspektroskopieeinrichtung offenbart, die die vorgenannte Vorsatzoptik-Einrichtung oder das vorgenannte optische System umfasst.

Die Aufgabe wird darüber hinaus mit einem eingangs genannten digitalen Zwilling bzw. mit einer rechnergestützten Simulation des vorgenannten optischen Systems zur Simulation eines durch die Detektoreinrichtung detektierten Interferenzmusters in Abhängigkeit von Rauheit der reflektierenden Oberfläche des Umlenkelements der Vorsatzoptik-Einrichtung gelöst.

Bei einer Ausführungsform kann es vorgesehen sein, dass der digitale Zwilling ein Modell der Vorsatzoptik-Einrichtung, welches insbesondere ein CAD-Modell der Vorsatzoptik-Einrichtung und/oder die die Rauheit der reflektierenden Goldbeschichtung beschreibenden Parameter, z.B. die Tiefe der durch das Aufrauen gebildeten Täler, sowie ein Modell der Laserlichtquelle und ein Modell der Detektoreinrichtung umfassen bzw. auf diesen Modellen basiert sein kann.

Durch eine solche Simulation können die Konstruktionseigenschaften der Vorsatzoptik und insbesondere die Rauheit der Oberfläche ermittelt und/oder optimiert werden.

Weitere Merkmale, Eigenschaften und Vorteile der vorliegenden Erfindung ergeben sich aus der nachfolgenden Beschreibung unter Bezugnahme auf die beiliegenden Figuren. Darin zeigen schematisch:
- FIG 1: eine Vorsatzoptik-Einrichtung,
- FIG 2: eine Laserspektroskopie-Einrichtung, und
- FIG 3: eine Recheneinheit mit einem auf der Recheneinheiten ausgeführten digitalen Zwilling.

In den Ausführungsbeispielen und Figuren können gleiche oder gleich wirkende Elemente jeweils mit den gleichen Bezugszeichen versehen sein.

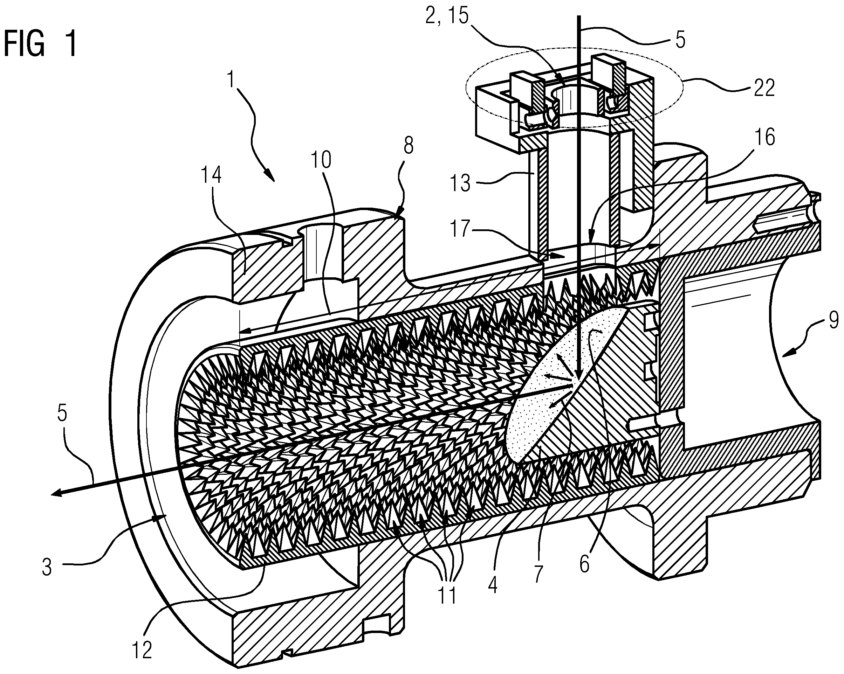

FIG 1 zeigt einen Querschnitt einer Vorsatzoptik-Einrichtung 1, die einer erfindungsgemäßen Vorsatzoptik-Einrichtung entspricht. Die Einrichtung 1 umfasst eine Lichteintrittsfläche 2, eine Lichtaustrittsfläche 3 und ein Lichtumlenkelement 4. Die Lichteintrittsfläche 2 und die Lichtaustrittsfläche 3 sind als Öffnungen ausgebildet. Das Lichtumlenkelement 4 ist gegenüber der Lichtaustrittsfläche 3 angeordnet und dazu ausgebildet, durch die Lichteintrittsfläche 2 in die Vorsatzoptik-Einrichtung 1 einfallendes Licht 5, vorzugsweise gesamtes durch die Lichteintrittsfläche 2 in die Vorsatzoptik 1 einfallendes Licht 5 in Richtung der Lichtaustrittsfläche 3 umzulenken.

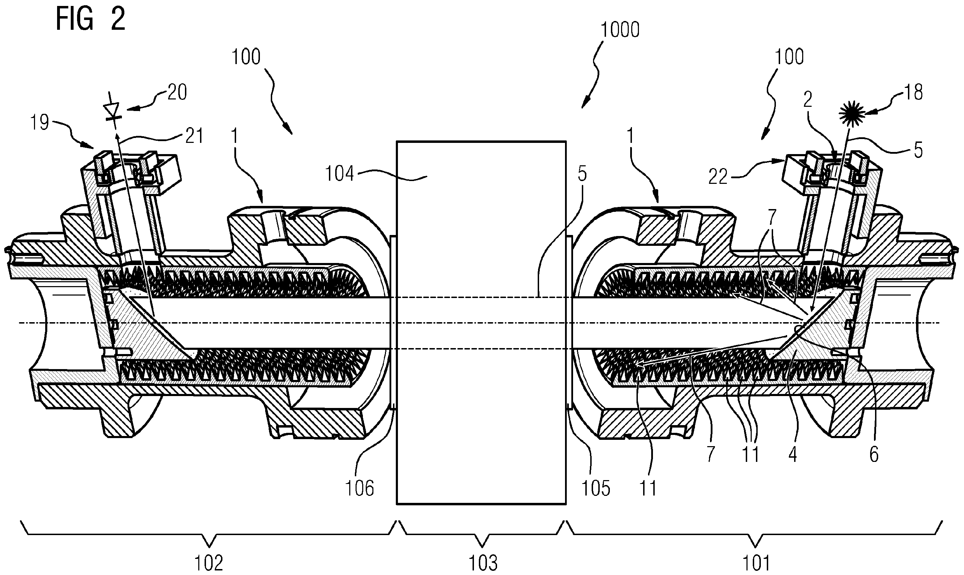

Das Licht 5 kann beispielsweise durch eine Laserlichtquelle 18 (wie in FIG 2 gezeigt) bereitgestellt werden.

Das Lichtumlenkelement 4 weist eine reflektierende Oberfläche 6 auf, die zumindest teilweise aufgeraut ist. Mit anderen Worten weist die reflektierende Oberfläche eine Rauheit auf. Dabei sind Erhebungen und Vertiefungen der rauen reflektierenden Oberfläche vorzugsweise größer als die Wellenlänge der Laserlichtquelle, liegen beispielsweise im Mikrometerbereich. Vorzugsweise weist die aufgeraute reflektierende Oberfläche keine Muster auf.

Durch die aufgeraute Oberfläche entsteht eine Vielzahl von unterschiedlich verzögerten Pfaden 7, die sich am Detektor 19 (siehe FIG 2) addieren. Dadurch verschmiert das durch Etalon-Effekte entstehendes Interferenzmuster. Die Vorsatzoptik-Einrichtung 1 dient also zur Verringerung der Interferenzstreifen, die durch in einem optischen System 100 einer Laserspektroskopieeinrichtung 1000 propagierendes Licht 5 erzeugt werden (siehe FIG 2).

Es kann zweckdienlich sein, wenn die gesamte reflektierende Oberfläche 6 des Lichtumlenkelements 4 aufgeraut ist.

Die reflektierende Oberfläche 6 kann eine Goldbeschichtung umfassen. Der FIG 1 ist zu entnehmen, dass die reflektierende Oberfläche 6 als eine Goldbeschichtung ausgebildet ist.

Die Goldbeschichtung kann sehr breitbandig von beispielsweise 700nm (aber auch von 765nm, 1500nm, 2300nm) bis 10pm reflektieren, wodurch, im Gegensatz zu Linsen, Laser 18 mit vielen verschiedenen Wellenlängen mit der gleichen Vorsatzoptik 1 verwendet werden können.

Die reflektierende Oberfläche 6 des Umlenkelements 4 kann planar oder als ein Parabolspiegel ausgebildet sein, wobei bei einer flach ausgebildeten Oberfläche 6 mehr Streuungen zur Seite (hinsichtlich des Umlenkelements 4) zu erwarten ist.

FIG 1 lässt insbesondere erkennen, dass die Vorsatzoptik-Einrichtung 1 keine Linsen aufweist. Dies erhöht die Effizienz der Verringerung der Interferenz.

Die reflektierende Oberfläche 6 des Umlenkelements 4 der FIG 1 ist unter einem 45° Winkel zu der Lichteintritts- 2 und zu der Lichtaustrittsfläche 3 geneigt. Mit anderen Worten hat das beispielsweise als ein Parabolspiegel ausgebildete Umlenkelement 4 ein Einfallswinkel von 45°.

FIG 1 lässt darüber hinaus erkennen, dass die Vorsatzoptik-Einrichtung 1 lichteintrittsseitig einen Bereich 22 aufweisen kann, der zur Aufnahme und vorzugsweise zur Befestigung einer Laserlichtquelle 18 ausgebildet ist.

Zur Bildung eines Referenzpfades kann die reflektierende Oberfläche 6 eine Ausnehmung, beispielsweise ein Loch z.B. eine Bohrung aufweisen, um einen Teil des Laserlicht auskoppeln zu können. Die Ausnehmung kann beispielsweise in der Mitte der Oberfläche 6 angeordnet sein.

Die Vorsatzoptik-Einrichtung kann ein rohrförmig ausgebildetes Gehäuse 8, beispielsweise aus Metall aufweisen. Dabei ist zu erkennen, dass das Lichtumlenkelement 4 in einer der Lichtaustrittsfläche 3 gegenüberliegenden Aufnahme 9 des Gehäuses 8 aufgenommen sein kann.

Das Gehäuse 8 weist einen Abschnitt zwischen der reflektierenden Oberfläche 6 des Umlenkelements 4 und der Lichtaustrittsfläche 3 auf. An seiner Innenwand 10 weist der Gehäuseabschnitt eine Vielzahl von pyramideförmigen Erhebungen 11 auf. Durch die pyramideförmigen Erhebungen 11 werden insbesondere Reflexionen an der Innenwand des Gehäuses 8 reduziert. Die Pyramidenstruktur verhindert Ausbreitung der Strahlen, die sich nicht entlang der optischen Achse 5 ausbreiten.

FIG 1 lässt insbesondere erkennen, dass die pyramideförmigen Erhebungen 11 über den gesamten Gehäuseinnenwandabschnitt 10 gleichmäßig verteilt sein können. Dadurch können die Reflexionen noch besser reduziert, bis gar vermieden werden.

Darüber hinaus ist FIG 1 zu entnehmen, dass die pyramideförmigen Erhebungen 11 als eine aus dem Gehäuse herausnehmenbare Einlage, beispielsweise eine gedruckte Kunststoffeinlage 12 ausgebildet sein kann.

Das Gehäuse 8 kann beispielsweise zwei rohrförmige Abschnitte 13, 14 aufweisen. Die Abschnitte können beispielsweise unter einem Winkel von etwa 90° zueinander angeordnet sein. Die optischen Achsen der rohrförmige Abschnitte 13, 14 stehen somit in etwa einem rechten Winkel zueinander. Dabei können der erste Abschnitt 13 eine erste Öffnung 15 und eine zweite, der der ersten Öffnung gegenüberliegende Öffnung 16 aufweisen. Die erste Öffnung 15 kann dabei die Lichteintrittsfläche 2 bilden. Die zweite Öffnung 16 kann in Form und Größe mit einer Öffnung 17 des zweiten Abschnitts 14 übereinstimmen, sodass das gesamte Licht 5 aus dem ersten Abschnitt 13 in den zweiten Abschnitt 14 gelangen kann.

FIG 2 zeigt schematisch eine Laserspektroskopieeinrichtung 1000 mit einem optischen System 100, wie sie beispielsweise bei Konzentrationsmessungen von Spurengasen eingesetzt werden kann.

Die Laserspektroskopieeinrichtung 1000 umfasst eine Lichtsender-Einrichtung 101, eine Lichtempfänger-Einrichtung 102, die das optische System 100 bilden, und eine Messkammer bzw. eine Messzelle 103. Die Messkammer 103 ist zur Aufnahme eines Messgases 104 ausgebildet und weist Fenster 105 und 106, beispielsweise druckfeste (z.B. 10 bar) Fenster auf. Die Fenster können auch als Optiken, z.B. Linsen ausgebildet sein.

Lichtsender-Einrichtung 101 umfasst die vorgenannte Vorsatzoptik-Einrichtung 1 und die Laserlichtquelle 18, die an dem Befestigungsbereich 22 der Vorsatzoptik-Einrichtung 1 montiert sein kann. Die Laserlichtquelle 18 kann beispielsweise als eine durchstimmbare Laserlichtdiode ausgebildet sein. Die Laserlichtquelle 18 erzeugt Laserlicht 5. Die Laserlichtquelle 18 ist derart in Bezug auf die Vorsatzoptik-Einrichtung 1 angeordnet bzw. an der Vorsatzoptik-Einrichtung 1 befestigt, dass im Wesentlichen das gesamte Laserlicht 5 durch die Lichteintrittsöffnung 2 der Vorsatzoptik 1 auf das Umlenkelement 4 trifft.

Durch die Rauheit der reflektierenden Goldbeschichtung 6 wird das auf das Umlenkelement 4 einfallende Laserlicht 5 stärker gestreut, als wenn das Licht 5 auf eine glatte, d. h. nicht aufgeraute reflektierende Oberfläche 6 einfallen würde. Dies führt dazu, dass eine Vielzahl von unterschiedlich verzögerten Streulichtstrahlen 7 entsteht, die (nach der Streuung am Messgas 104) sich am Detektor 20 der Detektoreinrichtung 19 addieren und zur Verschmierung der Hell-Dunkel-Stellen des Interferenzmusters führen.

FIG 2 ist zu entnehmen, dass die Lichtempfänger-Einrichtung 102 ebenfalls eine (weitere) Vorsatzoptik-Einrichtung 1 umfassen kann. D.h., dass das in der Vorsatzoptik-Einrichtung der Lichtempfänger-Einrichtung 102 angeordnete Umlenkelement ebenfalls eine aufgeraute reflektierende Oberfläche aufweisen kann. Die Rauheit der Oberfläche kann sich von der Rauheit der Oberfläche 6 des Umlenkelements 4 der Lichtsender-Einrichtung 101 abweichen. Es kann auch vorgesehen sein, dass die Oberfläche des detektorseitigen Umlenkelements nicht aufgeraut ist.

Weiterhin lässt FIG 2 erkennen, dass der Detektor 20 im Wesentlichen nur jenes Licht 21 empfängt, das durch die weitere Vorsatzoptik-Einrichtung 1 hindurchtritt. Somit ist das optische System derart ausgebildet, dass es nur zu wenigen bis gar keinen Lichtverlusten zwischen der Messzelle 103 und dem Detektor 20 kommt.

FIG 2 lässt weiterhin die Wirkung der pyramideförmigen Erhebungen 11 erkennen. Wie bereits erörtert, führen diese zu Reduktion von Reflexionen an der Gehäuseinnenwand die 14 der Vorsatzoptik 1. Mit anderen Worten verhindert die Pyramidenstruktur Ausbreitung der Strahlen, die sich nicht entlang der optischen Achse ausbreiten.

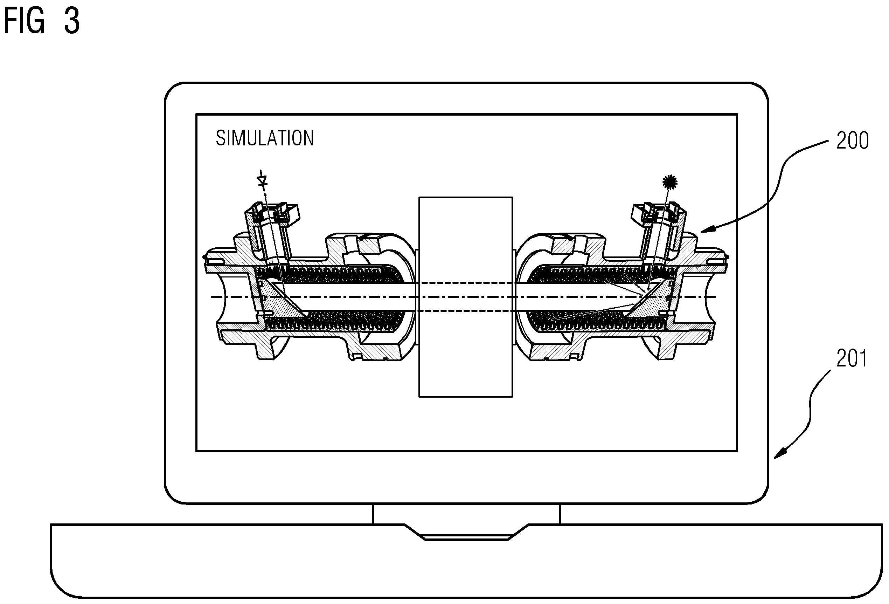

FIG 3 zeigt einen digitalen Zwilling 200, der auf einer Recheneinheit 201 ausgeführt wird. Die Recheneinheit kann beispielsweise als ein Laptop, ein PC, ein Tablett o. Ä. ausgebildet sein. Vorzugsweise ist der digitale Zwilling 200 als eine rechnergestützte Simulation der Laserspektroskopieeinrichtung 1000 mit dem optischen System 100 ausgebildet, also als ein Befehl umfassendes Computerprogrammprodukt, wobei beim Ausführen des Computerprogramms durch einen Computer die Befehle abgearbeitet werden, wodurch die Simulation durchgeführt wird. Der digitale Zwilling 200 kann zur Simulation eines durch die Detektoreinrichtung 19 detektieren Interferenzmusters in Abhängigkeit von Rauheit der reflektierenden Oberfläche 6 des Umlenkelements 4 der Vorsatzoptik-Einrichtung 1 der Lichtsender-Einrichtung 101 vorgesehen sein.

Hierzu kann der digitale Zwilling ein Modell der Vorsatzoptik-Einrichtung 1, welches insbesondere ein CAD-Modell der Vorsatzoptik-Einrichtung 1 und/oder die die Rauheit der reflektierenden Goldbeschichtung 6 beschreibenden Parameter, z.B. die Tiefe der durch das Aufrauen gebildeten Täler, sowie ein Modell der Laserlichtquelle 18 und ein Modell der Detektoreinrichtung 19 umfassen bzw. auf diesen Modellen basieren.

Durch eine solche Simulation können die Konstruktionseigenschaften der Vorsatzoptik 1 und insbesondere die Rauheit der Oberfläche 6 genauer ermittelt und/oder optimiert werden.

Die Bezugsziffern in den Ansprüchen dienen lediglich zum besseren Verständnis der vorliegenden Erfindung und bedeuten auf keinen Fall eine Beschränkung der vorliegenden Erfindung.

Obwohl die Erfindung im Detail durch Ausführungsbeispiele näher illustriert und beschrieben wurde, ist die Erfindung nicht durch die offenbarten Beispiele eingeschränkt. Variationen hiervon können vom Fachmann abgeleitet werden, ohne den Schutzumfang der Erfindung, wie er durch die nachfolgenden Patentansprüche definiert wird, zu verlassen. Insbesondere können die im Zusammenhang mit den hier beschriebenen Einrichtungen offenbarte Merkmale sinnvollerweise zur Weiterbildung der hier beschriebenen Simulationen eingesetzt werden und *vica versa.*

## Patentansprüche

1. Vorsatzoptik-Einrichtung zur Verringerung der Interferenzstreifen, die durch in einem optischen System einer Laserspektroskopieeinrichtung propagierendes Licht (5) erzeugt werden, wobei die Vorsatzoptik-Einrichtung (1) eine Lichteintrittsfläche (2), eine Lichtaustrittsfläche (3) und ein Lichtumlenkelement (4) umfasst, wobei die Lichteintrittsfläche (2) gegenüber dem Lichtumlenkelement (4) angeordnet ist, wobei das Lichtumlenkelement (4) gegenüber der Lichtaustrittsfläche (3) angeordnet ist und dazu ausgebildet ist, durch die Lichteintrittsfläche (2) in die Vorsatzoptik-Einrichtung (1) einfallendes Licht (5), vorzugsweise gesamtes durch die Lichteintrittsfläche in die Vorsatzoptik-Einrichtung einfallendes Licht in Richtung der Lichtaustrittsfläche (3) umzulenken, wobei das Lichtumlenkelement (4) eine reflektierende Oberfläche (6) aufweist, die zumindest teilweise aufgeraut ist.

2. Vorsatzoptik-Einrichtung nach Anspruch 1, wobei die gesamte reflektierende Oberfläche (6) des Lichtumlenkelements (4) aufgeraut ist.

3. Vorsatzoptik-Einrichtung nach Anspruch 1 oder 2, wobei die reflektierende Oberfläche (6) eine Goldbeschichtung umfasst, vorzugsweise als eine Goldbeschichtung ausgebildet ist.

4. Vorsatzoptik-Einrichtung nach einem der Ansprüche 1 bis 3, wobei die reflektierende Oberfläche (6) planar oder als ein Parabolspiegel ausgebildet ist.

5. Vorsatzoptik-Einrichtung nach einem der Ansprüche 1 bis 4, wobei die Vorsatzoptik-Einrichtung (1) keine Linsen umfasst.

6. Vorsatzoptik-Einrichtung nach einem der Ansprüche 1 bis 5, wobei die reflektierende Oberfläche (6) um etwa 45° Winkel zu der Lichteintritts- (2) und zu der Lichtaustrittsfläche (3) der Vorsatzoptik-Einrichtung (1) geneigt ist.

7. Vorsatzoptik-Einrichtung nach einem der Ansprüche 1 bis 6, wobei die Vorsatzoptik-Einrichtung (1) ein, beispielsweise rohrförmig ausgebildetes Gehäuse (8) aufweist.

8. Vorsatzoptik-Einrichtung nach Anspruch 7, wobei das Lichtumlenkelement (4) in einer der Lichtaustrittsfläche (3) gegenüberliegenden Aufnahme (9) des Gehäuses (8) aufgenommen ist.

9. Vorsatzoptik-Einrichtung nach Anspruch 7 oder 8, wobei an einem zwischen der Lichtaustrittsfläche (3) und der reflektierenden Oberfläche (6) liegenden Gehäuseinnenwandabschnitt (10) eine Vielzahl von vorzugsweise pyramideförmigen Erhebungen (11) angeordnet sind.

10. Vorsatzoptik-Einrichtung nach Anspruch 9, wobei die pyramideförmigen Erhebungen (11) über den gesamten Gehäuseinnenwandabschnitt (10) vorzugsweise gleichmäßig verteilt sind.

11. Vorsatzoptik-Einrichtung nach Anspruch 9 oder 10, wobei die pyramideförmigen Erhebungen (11) als eine aus dem Gehäuse herausnehmenbare Einlage (12), vorzugsweise eine Kunststoffeinlage, insbesondere eine gedruckte Kunststoffeinlage ausgebildet ist.

12. Vorsatzoptik-Einrichtung nach einem der Ansprüche 7 bis 11, wobei das Gehäuse (8) zwei, beispielsweise rohrförmige Abschnitte (13,14) - einen ersten und einen zweiten Abschnitt - aufweist, die unter einem Winkel von etwa 90° zueinander angeordnet sind, wobei der erste Abschnitt (13) eine erste Öffnung (15) und eine zweite, der der ersten Öffnung gegenüberliegende Öffnung (16) aufweist, wobei die erste Öffnung (15) die Lichteintrittsfläche (2) bildet und die zweite Öffnung (16) form- und größenübereinstimmend mit einer Öffnung (17) des zweiten Abschnitts (14) ist, sodass im Wesentlichen das gesamte Licht (5) aus dem ersten Abschnitt (13) in den zweiten Abschnitt (14) gelangen kann.

13. Optisches System einer Laserspektroskopieeinrichtung umfassend eine Vorsatzoptik-Einrichtung (1) nach einem der Ansprüche 1 bis 12, eine, vorzugsweise an der Vorsatzoptik-Einrichtung befestigbare Laserlichtquelle (18), beispielsweise einer durchstimmbare Laserlichtdiode und eine Detektoreinrichtung (19), wobei die Laserlichtquelle (18) dazu ausgebildet und derart angeordnet ist, erzeugtes Laserlicht (5) in die Vorsatzoptik-Einrichtung (1), die zwischen der Laserlichtquelle (18) und der Detektoreinrichtung (19) angeordnet ist, einzustrahlen.

14. System nach Anspruch 13, wobei die Detektoreinrichtung (19) eine weitere Vorsatzoptik-Einrichtung (1) nach einem der Ansprüche 1 bis 12 und einen Detektor (20) umfasst, wobei die weitere Vorsatzoptik-Einrichtung (1) derart angeordnet ist, dass der Detektor (20) im Wesentlichen nur jenes Licht (21) empfangen kann, das durch die weitere Vorsatzoptik-Einrichtung (1) hindurchtritt.

15. Digitaler Zwilling eines optischen Systems nach Anspruch 13 oder 14 zur Simulation eines durch die Detektoreinrichtung detektieren Interferenzmusters in Abhängigkeit von Rauheit der reflektierenden Oberfläche des Umlenkelements der Vorsatzoptik-Einrichtung.
